# EUROPEAN PATENT SPECIFICATION

(11) **EP 4 371 691 B1**
(45) Date of publication and mention of the grant of the patent: **11.03.2026**
(21) Application number: 23733833.0
(22) Date of filing: 30.03.2023
(51) Int. Cl.: B23K 20/10

(54) **ULTRASONIC WELDING UNIT**
ULTRASCHALLSCHWEISSEINHEIT
UNITÉ DE SOUDAGE PAR ULTRASONS

(30) Priority: 27.09.2022 CN 202211178016
(43) Date of publication of application: 22.05.2024
(73) Proprietor: Jiangsu Contemporary Amperex Technology Limited, Changzhou, Jiangsu 213300 (CN); Contemporary Amperex Technology Co., Limited, Ningde, Fujian 352100 (CN)
(72) Inventor: ZHONG, Guangcheng, Changzhou, Jiangsu 213300 (CN); SUN, Longchang, Changzhou, Jiangsu 213300 (CN); GUO, Bin, Changzhou, Jiangsu 213300 (CN); YE, Chang, Changzhou, Jiangsu 213300 (CN)
(74) Representative: Rowlands, Stuart Michael
(86) International application number: PCT/CN2023/085114
(87) International publication number: WO 2024/066266

(56) References cited:
- EP-B1- 1 339 521
- CN-A- 108 947 558
- CN-A- 115 283 812
- CN-U- 211 759 162
- CN-U- 211 759 162
- CN-U- 215 919 402
- JP-A- 2001 205 452
- JP-A- 2002 336 974
- JP-A- H11 128 837
- JP-B2- 3 705 911
- JP-U- S56 142 890
- US-A- 5 820 011
- US-A- 5 820 011
- US-A1- 2013 213 552

## Description

### TECHNICAL FIELD

This application relates to the field of ultrasonic welding technologies, and in particular to an ultrasonic welding unit and machine.

### BACKGROUND

Energy conservation and emission reduction are crucial to the sustainable development of the automotive industry. Electric vehicles, with their advantages in energy conservation and emission reduction, have become an important part of the sustainable development of the automotive industry. For electric vehicles, battery technology is an important factor in connection with their development.

The electrode material is an important component of a battery, and the quality of the electrode material is crucial. Generally, an ultrasonic welding machine is used to weld electrode materials, for example, welding an adapting piece to a tab, but the welding quality is poor in the related art.

EP1339521B1 relates to a device for welding together conductors by ultrasonic welding, comprising a compacting room that receives the conductors and that is delimited by working surfaces of tools. At least one of the tools consists of a support and, interlinked therewith, a working part that comprises one of the working surfaces. The working part comprising at least one working surface is joined with the support by soldering, gluing, welding or shrinking.

JP3705911B2 relates to an ultrasonic horn consisting of a metal main body and a ceramic part joined to the vibration emitting end of the metal main body. The ceramic part is formed in such a manner that the end face in the opposite side to the joining side to the metal body has >=8.0 apparent lightness N in terms of the lightness scale specified by JISZ8721-1.3, or that the end face has >=8 lightness V and <=2 chroma C in terms of the relation of lightness and chroma in certain tone specified by JISZ8721-1.4.

US5820011A relates to an ultrasonic tool horn having a horn main body made of a heat-treatable aluminum alloy. The aluminum alloy is heat treated so as to be as hard as 100 or more on the Vickers hardness scale. A thin intermediate layer of a non-heat-treatable aluminum alloy is provided between the horn main body and a ceramic tool attached to a slender end portion of the horn main body.

CN108947558A relates to a method for connecting a metal and Ti₃SiC₂ ceramic. A middle layer (a Ni foil or a composite Ti-Ni foil) is arranged between the metal and Ti₃SiC₂ ceramic. The whole system is placed in a vacuum diffusion furnace and heated to connect the metal and the Ti₃SiC₂ ceramic.

CN211759162U relates to an ultrasonic welding head which comprises a welding rod, a connecting portion and a welding head portion which are connected in sequence, a plurality of welding teeth are arranged on at least one side face of the welding head portion, and the top faces of the welding teeth are of an arc-shaped structure or a plane structure.

US2013213552A1, forming the basis for the preamble of the independent claim, relates to a vibratory welder for welding parts together, which has a vibratory tool made from a material having a low thermal conductivity of no greater than 5 watt/meter degree Kelvin and also having a sufficient strength and toughness for vibratory welding.

### SUMMARY

In view of the foregoing problem, this application provides an ultrasonic welding unit, and an ultrasonic welding machine, to improve the quality of welding the electrode material using ultrasonic waves.

According to a first aspect, this application provides an ultrasonic welding unit comprising a welding head and a welding base according to claim 1.

The welding base is disposed in the ultrasonic welding machine. The first action portion is used to support a to-be-welded member such as an electrode material of a battery. When the welding head in the ultrasonic welding machine approaches the welding base and clamps the to-be-welded member, the welding head transmits ultrasonic waves vibrating at a high frequency to the to-be-welded member. In addition, the first action portion in the welding base and the welding base body are integrally formed, and the first action portion does not shake with respect to the welding base body after receiving high-frequency vibration. The first action portion is capable of providing effective support for the to-be-welded member, thus ensuring the welding effect. Moreover, the first action portion is a ceramic member, which can prevent the to-be-welded member from binding to the first action portion. In this way, the welding effect is ensured while the binding between the to-be-welded member and the welding base is prevented effectively.

In an embodiment, a side of the first action portion facing away from the welding base body is provided with a plurality of first welding teeth, and at least part of the first welding teeth have an outer surface constructed as a spherical surface.

In an embodiment, the first welding tooth has a radius of 0.7 mm to 1.0 mm.

In an embodiment, a side of the second action portion facing away from the welding head body is provided with a plurality of second welding teeth, and at least part of the second welding teeth have an outer surface constructed as a spherical surface.

In an embodiment, the second welding tooth has a diameter of 0.7 mm to 1.0 mm.

This application further provides an ultrasonic welding unit including the foregoing ultrasonic welding unit.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are indicated by same reference signs. In the accompanying drawings:
FIG. 1 is a schematic structural diagram of a welding unit according to an embodiment of this application;
FIG. 2 is a schematic structural diagram of a first action portion in the welding unit in FIG. 1; and
FIG. 3 is a schematic structural diagram of a second action portion in the welding unit in FIG. 1.

Reference signs in the embodiments:
100. welding unit; 10. welding base; 12. welding base body; 14. first action portion; 141. first welding tooth; 30. welding head; 32; welding head body; 34. second action portion; and 341. second welding tooth.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "have", and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various positions in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of market development, application of electric vehicle batteries is becoming more and more extensive. Electric vehicle batteries are widely used not only in energy storage power supply systems such as hydro, thermal, wind, and solar power plants, but also in electric transportation tools such as electric bicycles, electric motorcycles, electric vehicles, and fields such military equipment and aerospace. With continuous expansion of application fields of electric vehicle batteries, market demands for the electric vehicle batteries are also increasing.

The applicant of this application notes that the welding quality of the electrode material as the core component of the battery is crucial. Generally, an ultrasonic welding machine is used for welding electrode materials, for example, welding an adapting piece to a tab. Specifically, the tab and the adapting piece are stacked from bottom up on the welding base, and then an ultrasonic transducer is used to convert electrical energy provided by the ultrasonic frequency power supply to mechanical energy of high-frequency vibration. Next, an ultrasonic modulator and a welding head transmit the mechanical energy to the adapting piece and the tab, thus implementing the welding between the adapting piece and the tab under the dual actions of pressure between the welding head and the welding base and ultrasonic waves. In addition, the high-frequency vibration occurs during ultrasonic welding. In order to prevent binding between the welding base and the electrode material under the action of high-frequency vibration, which affects the welding effect, a ceramic inserting block is typically disposed on the welding base to support the electrode material. However, the use of such welding base still leads to poor welding. Specifically, the ceramic inserting block is fastened to the body of the welding base using a fastener, and the ceramic inserting block is likely to shake under the action of high-frequency vibration, which in turn causes the welded electrode material to shake, influencing the welding quality.

To ensure the welding quality, the applicant has found through research that the ceramic inserting block and the welding base body can be integrally formed, such that the ceramic inserting block and the welding base body do not shake with respect to each other. Therefore, the ceramic inserting block can be used to prevent binding without affecting the welding performance due to the shaking of the ceramic inserting block, thus ensuring the welding effect.

The welding base, ultrasonic welding unit, and ultrasonic welding machine disclosed in the embodiments of this application can be used to weld electrode materials and other to-be-welded members. This is not limited herein.

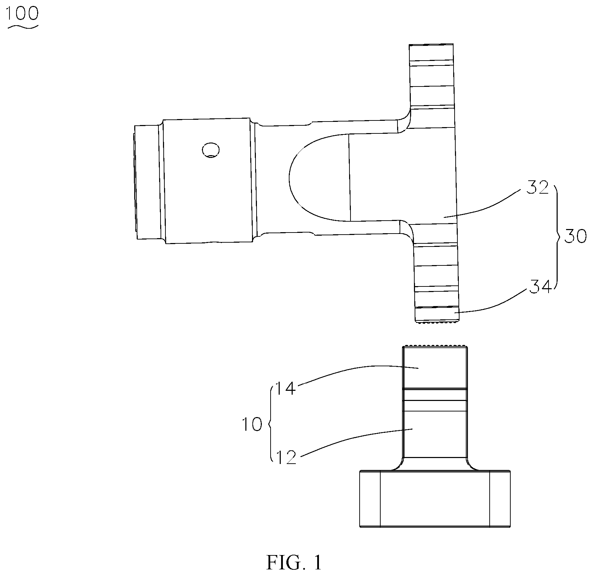

According to some embodiments of this application, referring to FIG. 1, this application provides an ultrasonic welding machine including an ultrasonic welding unit 100. The ultrasonic welding unit 100 includes a welding base 10 and a welding head 30, where the welding base 10 and the welding head 30 are disposed opposite each other, and the welding head 30 is controlled to move in a direction approaching or leaving the welding base 10. The welding base 10 is configured to support the to-be-welded member, and the welding head 30 can rise and fall with respect to the welding base 10. When the welding head 30 approaches the welding base 10 and clamps the to-be-welded member with the welding base 10, the welding head 30 transmits ultrasonic high-frequency vibration to the to-be-welded member, thereby completing the welding operation.

The welding base 10 includes a welding base body 12 and a first action portion 14. The first action portion 14 is disposed on the welding base body 12, the first action portion 14 is a ceramic member, and the first action portion 14 and the welding base body 12 are integrally formed.

As a bearing foundation of the first action portion 14, the welding base body 12 is made of metal and thus is strongly supportive.

The first action portion 14 is integrally disposed on the welding base body 12 and configured to support the to-be-welded member such as the electrode material. In addition, the first action portion 14 is a ceramic member with good performance in high temperature resistance and wear resistance. Thus, during ultrasonic welding, the first action portion 14 will not bind to the to-be-welded member due to high temperature or wear.

The welding base 10 is disposed in the ultrasonic welding machine. The first action portion 14 is used to support a to-be-welded member such as an electrode material of a battery. When a welding head 30 in the ultrasonic welding machine approaches the welding base 10 and clamps the to-be-welded member, the welding head 30 transmits ultrasonic waves vibrating at a high frequency to the to-be-welded member. In addition, the first action portion 14 in the welding base 10 and the welding base body 12 are integrally formed, and the first action portion 14 does not shake with respect to the welding base body 12 after receiving high-frequency vibration. The first action portion 14 is capable of providing effective support for the to-be-welded member, thus ensuring the welding effect. Moreover, the first action portion 14 being the ceramic member can prevent the to-be-welded member from binding to the first action portion 14. In this way, the welding effect is ensured while the binding between the to-be-welded member and the welding base 10 is prevented effectively.

The first action portion 14 and the welding base body 12 are welded to each other. In this way, the ceramic first action portion 14 is directly welded to the metallic welding body, such that the first action portion 14 and the welding base body 12 are integrally formed.

Further, the first action portion 14 is welded to the welding base body 12 via transient liquid phase bonding. Transient liquid phase bonding is a method for bonding materials, that is, a process in which an intermediate layer is added between base materials to be bonded, and then the intermediate layer and parts of the base materials are heated to cause them to melt and re-solidify to form a bonding. In this way, the ceramic is securely bonded to metal.

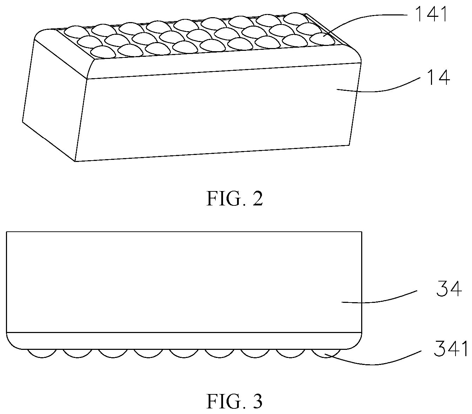

Referring to FIG. 2, in some embodiments, a side of the first action portion 14 facing away from the welding base body 12 is provided with a plurality of first welding teeth 141, and at least part of the first welding teeth 141 have an outer surface constructed as a spherical surface. In this way, with the plurality of first welding teeth 141 disposed on the top surface of the first action portion 14 to support the to-be-welded member, the friction force of contact between the to-be-welded member and the welding base 10 is increased, thereby preventing slippage between the to-be-welded member and the welding base 10 during ultrasonic high-frequency welding and ensuring the stability of the to-be-welded member, thus ensuring the welding quality.

In addition, as at least part of the first welding teeth 141 have the outer surface constructed as the spherical surface, compared with the conventional pointed welding teeth, the spherical welding teeth have a larger surface in contact with the to-be-welded member, thereby reducing the wear between the first welding teeth 141 and the to-be-welded member, prolonging the service life of the first welding teeth 141, thus prolonging service life of the welding base 10.

Optionally, the first welding tooth 141 has a radius of 0.7 mm to 1.0 mm, so that the first welding tooth 141 can provide a better support and is less likely to be worn. For example, the first welding tooth 141 has a radius of 0.8 mm.

Referring to FIG. 1, the welding head 30 includes a welding head body 32 and a second action portion 34. The second action portion 34 is disposed on the welding head body 32 and faces toward the first action portion 14, and the second action portion 34 is a ceramic member.

As an output part of ultrasonic waves in the ultrasonic welding machine, the welding head 30 is configured to transmit ultrasonic waves to the to-be-welded member after contacting the to-be-welded member. In addition, the welding head 30 is controlled to move in a direction approaching and leaving the welding base 10. When the welding head 30 is controlled to move in a direction approaching the welding base 10, the welding operation is started. When the welding head 30 is controlled to move in a direction leaving the welding base 10, the welding operation is ended.

Further, the welding head 30 includes a welding head body 32 and a second action portion 34. The second action portion 34 is disposed on the welding head body 32 and the second action portion 34 is a ceramic member. As a bearing foundation of the second action portion 34, the welding head body 32 is made of metal and thus is strongly supportive. The second action portion 34 is integrally disposed on the welding head body 32 and configured to support the to-be-welded member such as the electrode material. In addition, as the ceramic member, the second action portion 34 has good high temperature resistance and wear resistance. Thus, during ultrasonic welding, the second action portion 34 will not bind to the to-be-welded member due to high temperature or wear.

In some embodiments, the second action portion 34 and the welding head body 32 are welded to each other. In this way, the ceramic second action portion 34 is directly welded to the metallic welding body, such that the second action portion 34 and the welding head body 32 are integrally formed.

The welding head 30 is disposed in the ultrasonic welding machine and in contact with the to-be-welded member via the second action portion 34. When the welding head 30 in the ultrasonic welding machine approaches the welding base 10 and clamps the to-be-welded member, the welding head 30 transmits ultrasonic waves vibrating at a high frequency to the to-be-welded member. In addition, the second action portion 34 in the welding head 30 and the welding head body 32 are integrally formed, and the second action portion 34 does not shake with respect to the welding head body 32 during transmission of the high-frequency vibration, thus ensuring the welding effect. Moreover, the second action portion 34 being the ceramic member can prevent the to-be-welded member from binding to the second action portion 34. In this way, the welding effect is ensured while the binding between the to-be-welded member and the welding head 30 is prevented effectively.

Further, the second action portion 34 is welded to the welding head body 32 via transient liquid phase bonding. Transient liquid phase bonding is a method of bonding materials, that is, a process in which an intermediate layer is added between base materials to be bonded, and then the intermediate layer and parts of the base materials are heated to cause them to melt and re-solidify to form a bonding. In this way, the ceramic is securely bonded to metal.

Referring to FIG. 3, in some embodiments, a side of the second action portion 34 facing away from the welding head body 32 is provided with a plurality of second welding teeth 341, and at least part of the second welding teeth 341 have an outer surface constructed as a spherical surface. In this way, with the plurality of second welding teeth 341 disposed on the top surface of the second action portion 34 and in contact with the to-be-welded member, the friction force of contact between the to-be-welded member and the welding head 30 is increased, thereby preventing slippage between the to-be-welded member and the welding head 30 during ultrasonic high-frequency welding, and ensuring the stability of the to-be-welded member, thus ensuring the welding quality.

In addition, as at least part of the second welding teeth 341 have the outer surface constructed as the spherical surface, compared with the conventional pointed welding teeth, the spherical welding teeth have a larger surface in contact with the to-be-welded member, reducing the wear between the second welding teeth 341 and the to-be-welded member, thereby prolonging the service life of the second welding teeth 341, thus prolonging service life of the welding head 30.

Optionally, the second welding tooth 341 has a radius of 0.7 mm to 1.0 mm, so that the second welding tooth 341 can provide a better support and is less likely to be worn. For example, the second welding tooth 341 has a radius of 0.8 mm.

In some embodiments, the ultrasonic welding machine further includes a generator and a transducer system. The transducer system is disposed between the generator and the welding head 30. The generator generates high voltage and high frequency signals of 20 KHz (or 15 KHz), and then the transducer system transforms the signals to a high-frequency mechanical vibration and transmits the vibration to the welding head 30 so as to apply the vibration to the to-be-welded member. The friction on the surface of the to-be-welded member and between molecules leads to an increase of temperature transferred to interfaces. When the temperature reaches the melting point of the to-be-welded member itself, the interfaces of the to-be-welded member are quickly melted and then fill the gap between the interfaces. When the vibration stops, the to-be-welded member is cooled and solidified under a specified pressure, implementing the welding.

Referring to FIG. 1, this application provides an ultrasonic welding unit 100 including a welding base 10 and a welding head 30. The welding base 10 and the welding head 30 are disposed opposite each other, and the welding head 30 is controlled to move in a direction approaching or leaving the welding base 10. The welding base 10 is configured to support the to-be-welded member, and the welding head 30 can rise and fall with respect to the welding base 10. When the welding head 30 approaches the welding base 10 and clamps the to-be-welded member with the welding base 10, the welding head 30 transmits ultrasonic high-frequency vibration to the to-be-welded member, thereby completing the welding operation.

According to some embodiments of this application, this application provides the foregoing welding base 10. The welding base 10 includes a welding base body 12 and a first action portion 14. The first action portion 14 is disposed on the welding base body 12, the first action portion 14 is a ceramic member, and the first action portion 14 and the welding base body 12 are integrally formed. As a bearing foundation of the first action portion 14, the welding base body 12 is made of metal and thus is strongly supportive. The first action portion 14 is integrally disposed on the welding base body 12 and configured to support the to-be-welded member such as the electrode material. In addition, the first action portion 14 is a ceramic member with good performance in high temperature resistance and wear resistance. Thus, during ultrasonic welding, the first action portion 14 will not bind to the to-be-welded member due to high temperature or wear.

The welding base 10 is disposed in the ultrasonic welding machine. The first action portion 14 is used to support a to-be-welded member such as an electrode material of a battery. When a welding head 30 in the ultrasonic welding machine approaches the welding base 10 and clamps the to-be-welded member, the welding head 30 transmits ultrasonic waves vibrating at a high frequency to the to-be-welded member. In addition, the first action portion 14 in the welding base 10 and the welding base body 12 are integrally formed, and the first action portion 14 does not shake with respect to the welding base body 12 after receiving high-frequency vibration. The first action portion 14 is capable of providing effective support for the to-be-welded member, thus ensuring the welding effect. Moreover, the first action portion 14 being the ceramic member can prevent the to-be-welded member from binding to the first action portion 14. In this way, the welding effect is ensured while the binding between the to-be-welded member and the welding base 10 is prevented effectively.

This application provides a welding unit 100 including a welding base 10 and a welding head 30. The welding base 10 includes a welding base body 12 and a first action portion 14. The first action portion 14 is disposed on the welding base body 12, the first action portion 14 is a ceramic member, and the first action portion 14 and the welding base body 12 are integrally formed. The welding head 30 includes a welding head body 32 and a second action portion 34. The second action portion 34 is disposed on the welding head body 32, the second action portion 34 is a ceramic member, and the second action portion 34 and the welding head body 32 are integrally formed.

As the ceramic members, the first action portion 14 and the second action portion 34 both have good performance in high temperature resistance and wear resistance. Thus, during ultrasonic welding, the first action portion 14 and the second action portion 34 will not bind to the to-be-welded member due to high temperature or wear. In addition, the first action portion 14 is welded to the welding base body 12, the second action portion 34 is welded to the welding head body 32, and the first action portion 14 and the second action portion 34 are integrally formed, such that when a high-frequency ultrasonic wave is transmitted to the first action portion 14 and the second action portion 34, the first action portion 14 and the second action portion 34 neither shake, thus ensuring the welding effect. In this way, the welding effect is ensured while the binding between the to-be-welded member and the welding base 10 is prevented effectively.

Technical features in the foregoing embodiments may be combined in any way. For brevity of description, not all possible combinations of the technical features in the foregoing embodiments are described.

The foregoing embodiments only represent several implementations of this application, and descriptions thereof are specific and detailed, but should not be construed as a limitation on the scope of this application. It should be noted that those of ordinary skill in the art may further make several modifications and improvements without departing from the concept of this application. The protection scope of this application should be subject to the appended claims.

## Claims

1. An ultrasonic welding unit (100) comprising a welding head (30) and a welding base (10),
wherein the welding base (10) comprises a welding base body (12) and a first action portion (14), wherein the first action portion (14) is disposed on the welding base body (12), wherein the first action portion (14) is a ceramic member, and the welding base body (12) is made of metal, wherein the first action portion (14) and the welding base body (12) are integrally formed,
wherein the welding head (30) and the welding base (10) are disposed opposite each other, and the welding head (30) is controlled to move in a direction approaching or leaving the welding base (10);
wherein the welding head (30) comprises a welding head body (32) and a second action portion (34), wherein the second action portion (34) is disposed on the welding head body (32) and faces toward the first action portion (14), wherein the second action portion (34) is a ceramic member, and the welding head body (32) is made of metal,
**characterized in that** the first action portion (14) is welded to the welding base body (12) via transient liquid phase bonding, and **in that** the second action portion (34) is welded to the welding head body (32) via transient liquid phase bonding.

2. The ultrasonic welding unit (100) according to claim 1, wherein a side of the first action portion (14) facing away from the welding base body (12) is provided with a plurality of first welding teeth (141), and at least part of the first welding teeth (141) have an outer surface constructed as a spherical surface.

3. The ultrasonic welding unit (100) according to claim 2, wherein the first welding tooth (141) has a radius of 0.7 mm to 1.0 mm.

4. The ultrasonic welding unit (100) according to any preceding claim, wherein a side of the second action portion (34) facing away from the welding head body (32) is provided with a plurality of second welding teeth (341), and at least part of the second welding teeth (341) have an outer surface constructed as a spherical surface.

5. The ultrasonic welding unit (100) according to claim 4, **characterized in that** the second welding tooth (341) has a diameter of 0.7 mm to 1.0 mm.

6. An ultrasonic welding machine, comprising the ultrasonic welding unit (100) according to any preceding claim.

## Patentansprüche

1. Ultraschallschweißeinheit (100), die einen Schweißkopf (30) und eine Schweißbasis (10) umfasst,
wobei die Schweißbasis (10) einen Schweißbasiskörper (12) und ein erstes Wirkstück (14) umfasst, wobei das erste Wirkstück (14) auf dem Schweißbasiskörper (12) positioniert ist, wobei das erste Wirkstück (14) ein keramisches Bauteil ist und der Schweißbasiskörper (12) aus Metall hergestellt ist, wobei das erste Wirkstück (14) und der Schweißbasiskörper (12) einstückig ausgebildet sind,
wobei der Schweißkopf (30) und die Schweißbasis (10) einander gegenüberliegend positioniert sind und der Schweißkopf (30) so gesteuert wird, dass er sich in einer zu der Schweißbasis (10) hin oder von dieser weg verlaufenden Richtung bewegt;
wobei der Schweißkopf (30) einen Schweißkopfkörper (32) und ein zweites Wirkstück (34) umfasst, wobei das zweite Wirkstück (34) auf dem Schweißkopfkörper (32) positioniert und dem ersten Wirkstück (14) zugewandt ist, wobei das zweite Wirkstück (34) ein keramisches Bauteil ist und der Schweißkopfkörper (32) aus Metall hergestellt ist,
**dadurch gekennzeichnet, dass** das erste Wirkstück (14) durch Transient-Liquid-Phase-Bonden an dem Schweißbasiskörper (12) angeschweißt ist und dass das zweite Wirkstück (34) durch Transient-Liquid-Phase-Bonden an dem Schweißkopfkörper (32) angeschweißt ist.

2. Ultraschallschweißeinheit (100) nach Anspruch 1, wobei eine von dem Schweißbasiskörper (12) abgewandte Seite des ersten Wirkstücks (14) mit einer Vielzahl erster Schweißnoppen (141) versehen ist und mindestens ein Teil der ersten Schweißnoppen (141) eine als sphärische Oberfläche gestaltete Außenoberfläche aufweist.

3. Ultraschallschweißeinheit (100) nach Anspruch 2, wobei die erste Schweißnoppe (141) einen Radius von 0,7 mm bis 1,0 mm aufweist.

4. Ultraschallschweißeinheit (100) nach einem der vorhergehenden Ansprüche, wobei eine von dem Schweißkopfkörper (32) abgewandte Seite des zweiten Wirkstücks (34) mit einer Vielzahl zweiter Schweißnoppen (341) versehen ist und mindestens ein Teil der zweiten Schweißnoppen (341) eine als sphärische Oberfläche gestaltete Außenoberfläche aufweist.

5. Ultraschallschweißeinheit (100) nach Anspruch 4, **dadurch gekennzeichnet, dass** die zweite Schweißnoppe (341) einen Durchmesser von 0,7 mm bis 1,0 mm aufweist.

6. Ultraschallschweißmaschine, die die Ultraschallschweißeinheit (100) nach einem der vorhergehenden Ansprüche umfasst.

## Revendications

1. Unité de soudage par ultrasons (100) comportant une tête de soudage (30) et une base de soudage (10),
dans laquelle la base de soudage (10) comporte un corps de base de soudage (12) et une première partie à action (14), dans laquelle la première partie à action (14) est disposée sur le corps de base de soudage (12), dans laquelle la première partie à action (14) est un élément céramique, et le corps de base de soudage (12) est réalisé en métal, dans laquelle la première partie à action (14) et le corps de base de soudage (12) sont formés d'une seule pièce,
dans laquelle la tête de soudage (30) et la base de soudage (10) sont disposées à l'opposé l'une de l'autre, et la tête de soudage (30) est commandée à des fins de déplacement dans une direction se rapprochant ou s'éloignant de la base de soudage (10) ;
dans laquelle la tête de soudage (30) comporte un corps de tête de soudage (32) et une deuxième partie à action (34), dans laquelle la deuxième partie à action (34) est disposée sur le corps de tête de soudage (32) et est orientée vers la première partie à action (14), dans laquelle la deuxième partie à action (34) est un élément céramique, et le corps de tête de soudage (32) est réalisé en métal,
**caractérisée en ce que** la première partie à action (14) est soudée au corps de base de soudage (12) par le biais d'une liaison en phase liquide transitoire, et **en ce que** la deuxième partie à action (34) est soudée au corps de tête de soudage (32) par le biais d'une liaison en phase liquide transitoire.

2. Unité de soudage par ultrasons (100) selon la revendication 1, dans laquelle un côté de la première partie à action (14) orienté à l'opposé du corps de base de soudage (12) est doté d'une pluralité de premières dents de soudage (141), et au moins une partie des premières dents de soudage (141) ont une surface extérieure construite sous la forme d'une surface sphérique.

3. Unité de soudage par ultrasons (100) selon la revendication 2, dans laquelle la première dent de soudage (141) a un rayon allant de 0,7 mm à 1,0 mm.

4. Unité de soudage par ultrasons (100) selon l'une quelconque des revendications précédentes, dans laquelle un côté de la deuxième partie à action (34) orienté à l'opposé du corps de tête de soudage (32) est doté d'une pluralité de deuxièmes dents de soudage (341), et au moins une partie des deuxièmes dents de soudage (341) ont une surface extérieure construite sous la forme d'une surface sphérique.

5. Unité de soudage par ultrasons (100) selon la revendication 4, **caractérisée en ce que** la deuxième dent de soudage (341) a un diamètre allant de 0,7 mm à 1,0 mm.

6. Machine de soudage par ultrasons, comportant l'unité de soudage par ultrasons (100) selon l'une quelconque des revendications précédentes.
